# EUROPEAN PATENT APPLICATION

(11) **EP 2 910 763 A1**
(43) Date of publication of application: **26.08.2015**
(21) Application number: 12891119.5
(22) Date of filing: 28.12.2012
(51) Int. Cl.: F02G 5/02

(54) **CONTAINER UNIT**

(71) Applicant: Mitsubishi Heavy Industries, Ltd., Tokyo 108-8215 (JP)
(72) Inventor: YAMANAKA, Tomokazu, Tokyo 108-8215 (JP); HIRAI, Takuya, Tokyo 108-8215 (JP); SHIMODAIRA, Shuichi, Sagamihara-shi Kanagawa 252-5293 (JP); NARITA, Hirokazu, Sagamihara-shi Kanagawa 252-5293 (JP); ABE, Takeshi, Sagamihara-shi Kanagawa 252-5293 (JP)
(74) Representative: Hoffmann Eitle
(86) International application number: PCT/JP2012/084199
(87) International publication number: WO 2014/103058

(57) **Abstract**

The present invention obtains an engine generator device including: a longer generator container that houses a generator functional portion including an engine and a generator driven by the engine; and a shorter exhaust heat utilization container that houses a boiler utilizing the exhaust heat of the engine, and a heat exchanger. By effective utilization of the containers and by effective connection between the two containers, pipe and cable arrangement is not necessary. Further, by saving space, maintainability after the assembling is satisfactory. A combined unit is provided to include: a longer generator container 20 in which a water-cooled engine 21 is disposed at approximately a center position in the longitudinal direction of the container, and, by sandwiching the engine 21, one or a plurality of radiators 4 are disposed on the container 0-f side, and a generator 22 is disposed on the container 40-f side, with an exhaust gas outlet port 21a of the engine provided at approximately a center part of the container above the engine; and a shorter exhaust heat utilization container 1 in which a muffler 2 is erected on the 20-f side, an exhaust gas inlet port 2a is opened on a top wall of the container, and a boiler 4 generating steam by taking in exhaust gas of the engine 21 via the muffler 2 is aligned in the container space on the container 0-f side from the muffler erected position. The longer generator container 20 and the shorter exhaust heat utilization container 1 are aligned in parallel in the longitudinal direction by making respective longer walls face each other so that the combined unit is formed. In the longer generator container, adjacently to the opposite wall on the opposite side of a facing wall that faces the shorter exhaust heat utilization container 1, the one or plurality of radiators 4 are extensively arranged along the opposite surface.

## Description

### TECHNICAL FIELD

The present invention relates to a container unit incorporating a cogeneration utilization engine generator device, and relates, more particularly to a generator container having combined together a generator container in which there are housed an engine and parts on a generator body side including a generator driven by the engine, and an exhaust heat utilization container in which there are housed exhaust heat utilization devices including a boiler and a heat exchanger that generate steam and warm water for warm water supply by utilizing exhaust heat of the engine.

### BACKGROUND

The engine generator device equipped with an engine and a generator driven by the engine has been conventionally known. Demand for engine generator devices is increasing in developing countries because the engine generator devices can be easily installed to respond to shortage in normal commercial power and increase in power load in the developing countries and also because the engine generator devices do not require a power distribution network due to decentralized power generation. Further, in the developing countries, in need of emergency power at a disaster time, individual parts can be transported to places in need of generated power and can be locally assembled. Respective parts can become finished products by only piping construction. Therefore, demand for a local-assembly type, particularly, medium-sized distributed power supply, has been growing in recent years both inland and abroad.

However, although demand for distributed-type engine power generation sources is increasing, their assembly technicians are unevenly distributed. Therefore, even when main parts of the engine and the generator are formed as units, connection of a unit engine and a generator and connection of pipes finally need to be performed on the local side. However, even on the local side, skill levels vary greatly between developing countries and developed countries and also within the same country and between regions. Depending on skill levels of assembling workers, a large variation occurs in assembling times.

Further, even when the main parts are formed as units, because of a medium-size generator, it takes days to assemble and adjust the generator, and the work will not be in time of an emergency power requirement at a disaster time such as at the last nuclear accident time when power was urgently necessary.

In order to solve such drawbacks, there has been disclosed a technique of utilizing a container used for marine transportation, land transportation, and air transportation by directly mounting an engine generator device in the container, by eliminating the need for assembling and adjusting performance on the local side, that is, a container cargo handling device having the engine, the generator and the like driven by the engine arranged in series in the container (underlying technique of Patent Document 1).

However, sizes of containers to be mounted on and transported by a vessel, a truck, and the like are common in general. According to the standards defined by the ISO standard, for sizes, there are only two kinds of length for containers, 20 f (6 m) and 40 f (12 m) (although a container of a length 45 f is also standardized, a vehicle of this container cannot run in Japan under the Road Traffic Law at present). Container width is regulated as 8 f (2.4 m) and height is regulated as 8.6 f (2.6 m), and therefore, containers capable of conveying on public roads under the standards in Japan are only those of 40 f (12 m) and 20 f. The size and length of the engine that can be housed in the container are also naturally limited.

Meanwhile, even when using a high-efficiency gas engine, the engine generator uses a fossil fuel called natural gas. From the viewpoint of energy saving and CO₂ saving, investigating design and development of a cogeneration type generator effectively utilizing exhaust heat of exhaust gas and engine cooling water is necessary. For this purpose, among conventional engine generators, there have been developed a large number of engine generators equipped with co-generators that positively utilize engine exhaust heat and obtain steam heat by heat exchange with exhaust gas, and warm water for warm-water supply by heat exchanging by heat exchangers heated cooling water used for cooling the engine with fresh water (refer to Patent Document 2 and the like).

### Citation List

### Patent Literature

Patent Document 1: Unexamined Japanese Patent Publication No. 2008-247576
Patent Document 2: Unexamined Japanese Patent Publication No. 2004-263589

### SUMMARY

### Technical Problem

However, even when a large type 40-f container is used, in order to house not only the engine and the generator but also the heat exchanger for generating warm water and the boiler for generating steam, the space for arranging the engine needs to be reduced by a corresponding amount, and, as a result, the rating needs to be small as compared with that of the container space. Consequently, in order to obtain required power supply output, the number of containers become unnecessarily large, and this is a problem from the aspect of cost saving and space saving.

In view of the above technical problem, the present invention provides a container-unit type cogeneration utilization engine generator device that effectively utilizes two containers, by effectively connecting the two containers, by saving space, and with good maintainability after the assembling. The cogeneration utilization engine generator device includes: a longer container, particularly a 40-f container, housing an original generation functional portion which functions as an engine generator including an engine and a generator driven by the engine, the longer container being mounted with an intermediate type power supply device of a required output, without unnecessarily lowering the rating of the engine; and a shorter exhaust heat utilization container, preferably a 20-f container as a half of the 40-f container, housing a boiler and a heat exchanger utilizing the exhaust heat of the engine.

That is, an object of the present invention is to provide a container-unit type cogeneration utilization engine generator device in which there are effectively arranged two kinds of containers in a small disposition space and which has substantially shortened an assembling time (assembling days), the two kinds of containers including: a 40-f container housing an engine and parts on a generator body side including a generator driven by the engine; and a 20-f container housing exhaust heat utilization devices including a boiler and a heat exchanger which respectively generate steam and warm water for warm water supply by utilizing exhaust heat of the engine.

The one longer container housing the original generation functional portion is not limited to the 40-f container but also includes a 45-f container, and therefore, these containers will be referred to as longer generator containers. On the other hand, shorter containers including the 20-f container that house exhaust heat utilization devices will be referred to as (shorter) exhaust heat utilization containers.

### Solution to Problem

### (Summary of containers used in the present invention)

In order to solve the above problem, the present invention provides
1) a container-unit type cogeneration utilization engine generator device having combined together
   a longer generator container housing a water-cooled engine, a radiator dissipating excessive heat of cooling water circulated in the engine and heated by heat absorption, and a generator driven by the engine, and
   a shorter exhaust heat utilization container housing a muffler which reduces exhaust noise of exhaust gas of the engine, a boiler which takes in the exhaust gas via the muffler and generates steam by heat exchange with the exhaust gas, and a heat exchanger which generates warm water for warm water supply by heat exchange with heated cooling water discharged from the engine.

Next, as configuration elements of the present invention, there will be briefly described respective configurations of the longer generator container housing the water-cooled engine, the radiator, and the generator, and the shorter exhaust heat utilization container housing the muffler, the boiler, and the heat exchanger.

### (Summary of the longer generator container (generally, a 40-f container))

2) The longer generator container includes the engine at approximately a center position in a longitudinal direction (when the container is the 40-f container, preferably, the center of gravity of the engine is at approximately the center position or in the range of ± 10 f on both sides in the longitudinal direction of the 20-f position as the center position of the 40 f), and includes one or a plurality of radiators on one side (hereinafter, referred to as a 0-f side) in the container longitudinal direction sandwiching the engine, and the generator on the other side (hereafter, referred to as a 40-f side) in the container longitudinal direction, and also
   between a shorter wall on the 0-f side and the engine, there are disposed: the radiators extended along the longer wall adjacently to the longer wall surface of the 40-f container on one side in the width direction; an outlet port of heated cooling water of the engine to an outside and a return port of the heat cooling water, on the other side of the longer wall surface on the side facing the radiators; and an exhaust gas outlet port of the engine, near the center of a container top wall facing the engine, preferably in deviation to a 0-f side from a 20-f position.

Further, on each of shorter walls on both sides in the longitudinal direction, there are provided double doors by which the shorter wall surface is fully opened laterally and are configured so that the engine and the generator can be taken out from each door. On the depth side of the double doors on the generator side (40-f side), a control panel is disposed.

### (Summary of the shorter generator container (generally, a 20-f container housing heat utilization devices))

3) Generally, a shorter exhaust heat utilization container regulated by 20 f has the muffler arranged vertically to erase exhaust noise by taking in the exhaust gas of the engine to the shorter wall (hereinafter, referred to as a 20-f side shorter wall) on the other side of the container longitudinal direction. The exhaust gas inlet port of the muffler is connected to the container top wall, and the heat exchanger is set parallel to the muffler in a shorter width direction of the container. On the other hand, on one side (hereinafter, referred to as a 0-f side shorter wall) in the container longitudinal direction, there is disposed the boiler that vaporizes by the exhaust gas the water which flows in the water cooling pipe.

Further, in the heat exchanger, on one longer wall surface of the container, there are provided the inlet port of the cooling water heated by the engine, and the return port for returning the heat-exchanged cooling water to the engine and the radiators.

Further, a cooling water supply pipe of which the inlet port and the return port of heated cooling water combine the heat exchanger on the 40-f side is extensively disposed in the space between the boiler and the muffler. On the other longer wall surface on the opposite side of the one longer wall surface on which the inlet port and the return port of the heated cooling water are disposed, an inlet port of fresh water to be heat exchanged by the heat exchanger is provided.

### (A process leading to the present invention)

The length in the longitudinal direction of the longer generator container is as long as 40 f (12 m). However, the width is set to 8 f (2.4 m), and the height is set to 8.6 f (2.6 m), which are small to allow a truck mounted with the container to run on public roads.

Therefore, similarly to Patent Document 1, it is necessary that each unit of the engine, the generator, and other unit (a wind power generation unit according to the cited literature 1) is disposed in series along the container longitudinal direction so that a layout space of the engine is set as large as possible. However, as described in Patent Document 1, when the generator and other units are arranged in series in this order by setting the engine at the front, because the weight of the engine is relatively large as compared with the weights of other units, the center of gravity of the container is deviated to the container front side. Consequently, there is a high possibility that the container is inclined at the time of lifting the container with the crane or the like, with occurrence of an unexpected accident.

Therefore, in the present invention, relatively to each unit of the generator and the radiator, the engine having a large weight load is disposed at a center position in the longitudinal direction of the generator container, and the generator and the radiator are disposed in series on both sides of the engine by sandwiching the engine.

When the above configuration is employed, the muffler is to be fitted to the container top wall above the engine. However, when this configuration is adopted, only a muffler portion is provided in stretch on the container top wall, and a total height of the container becomes larger than the standard, and the truck mounted with the container cannot run on public roads.

Therefore, it is general that the muffler is configured to be easily taken out from the container, and the muffler is configured to be fitted at the time of assembling on the site. Based on this configuration, not only the number of assembling steps on the local side increases, environmental problems can easily occur due to the exposure of the muffler to the outside and vibration and thermal influences.

Accordingly, in the present invention, the muffler is arranged near the 20-f end surface side on the side of the shorter exhaust heat utilization container which is generally regulated by 20 f. By increasing the space on the 0-f side in the exhaust heat utilization container, the layout space of the boiler, the heat exchanger, and the like is increased.

Because the engine of the large weight burden is disposed at the center position in the longitudinal direction of the longer generator container, it becomes possible to provide a layout configuration having a sufficient margin for arranging the muffler, the boiler, and the heat exchanger on the 20-f side container side.

### (Layout configuration of a container group)

Next, it will be investigated whether the space is saved most and whether there is no arrangement of the pipe and the cable when the shorter exhaust heat utilization container and the longer generator container are laid out in the case of taking the above configuration.

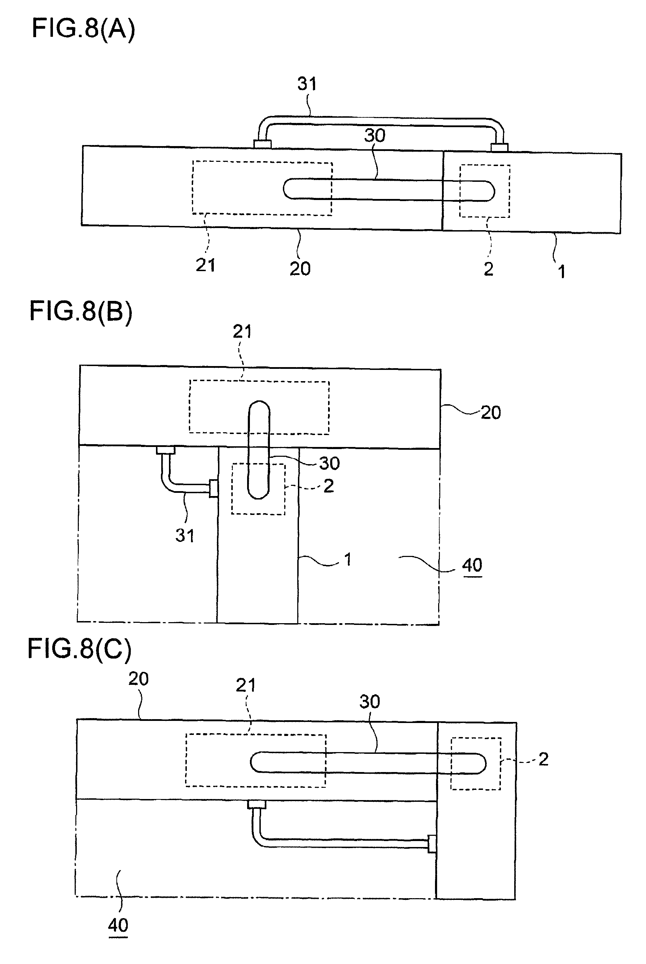

First, as illustrated in FIG. 8(A), there is a method of connecting the 40-f end surface of the longer generator container and the 0-f end surface of the shorter exhaust heat utilization container to form a long side.

When this layout configuration is employed, the length in the container length direction becomes 60 f, but the width in the width direction becomes 8 f (2.4 m). In the case of a ground (a power supply arrangement position) of which one side is equal to or larger than 20 m, because the width is the small 8 f, a plurality of cogeneration power supply devices can be arranged densely, and this is preferable.

However, as described above, when the containers are connected in the longitudinal direction, the exhaust gas outlet port fitted to approximately the center part of the top wall of the longer generator container and a muffler inlet pipe provided on the container top wall on the shorter exhaust heat utilization container side are connected by a communication pipe. In order to shorten the length of the communication pipe, the 20-f side end surface of the exhaust heat utilization container and the 40-f end surface of the generator container need to be configured to face each other. This necessarily results in a long distance between the radiator on the 0-f end surface side arranged in the generator container and the heat exchanger arranged on the exhaust heat utilization container side (because the engine, the generator, and the muffler are present between the radiator and the heat exchanger). Further, arranging the pipe inside the container along the container longitudinal direction is actually impracticable, and the pipe is to be actually arranged along the longer wall outside the container. Therefore, the arranged length of the pipe and the disposition width also become large. In addition, an oil-supply pipe containing warm water is to be arranged long adjacently to the outer side surface of the container, and this is dangerous when the pipe is taken out by error.

Accordingly, the layout in FIG. 8(A) cannot be employed.

Next, there is a T-shaped layout configuration as a configuration in FIG. 8(B).

In the drawing, on the center longer wall surface adjacent to the exhaust gas outlet port fitted to approximately the center part of the top wall of the longer generator container, there is connected in a T shape the muffler side shorter end surface of the shorter exhaust heat utilization container on the muffler disposition side.

According to this configuration, a straight line distance between the exhaust gas outlet port fitted to approximately the center part of the top wall of the longer generator container and the muffler inlet pipe provided on the container top wall on the shorter exhaust heat utilization container side is substantially shortened as compared with the distance in FIG. 8(A), and the length of the communication pipe can be substantially shortened. On the other hand, the pipe between the radiator on the 0-f end surface side arranged in the longer generator container and the heat exchanger arranged on the exhaust heat utilization container side needs to be arranged in the external space at the outside of the container in a similar manner to that in FIG. 8(A).

Further, additionally, the installation space of the container unit becomes (40 f (12 m) x (20 f + 8 f (8.6 m))), and the unnecessary installation space becomes large.

In order to reduce the installation space of the container unit, there may be considered an L-shaped layout as illustrated in FIG. 8(C). When the layout in an L-shaped configuration is provided by bringing into contact with each other the shorter end surface of the longer generator container and the longer surface on the muffler side of the shorter exhaust heat utilization container, a communication pipe distance between the exhaust gas outlet port fitted to approximately the center part of the 40-f top wall and the muffler inlet pipe of the shorter exhaust heat utilization container on the muffler disposition side becomes about (40 f/2 (6 m) + 8/2 f (4.3 m)) which becomes a moderate short distance. Further, because of the L-shape, the connecting pipe distance becomes ((40 f (12 m) + 8 f (8.6 m)) x (20 f - 8 f (8.6 m)), and there is no change in that an unnecessary installation space becomes large.

### (Summary of the present invention)

In view of the above problems, the present invention provides a container unit including:
a generator container having disposed in the container, an engine and one or a plurality of radiators on one side in a container longitudinal direction of the engine; and
an exhaust heat utilization container recovering exhaust heat of the engine and generating steam or warm water, wherein
the generator container and the exhaust heat utilization container form a combination unit by making respective longer walls face each other, and in the generator container, adjacently to a longer wall (hereinafter, referred to as an opposite wall) on an opposite side of a facing wall that faces the exhaust heat utilization container, the one or plurality of radiators are extensively arranged along the opposite surface.

According to the present invention, the cooling water for generating the warm water to be guided to the heat exchanger near the radiator can be easily taken out, and the radiator can be large. Therefore, maintainability improves.

In this case, preferably, the water guide port and the return port of the heat exchanger are integrally arranged at one position so that maintainability and easiness of installation further improve.

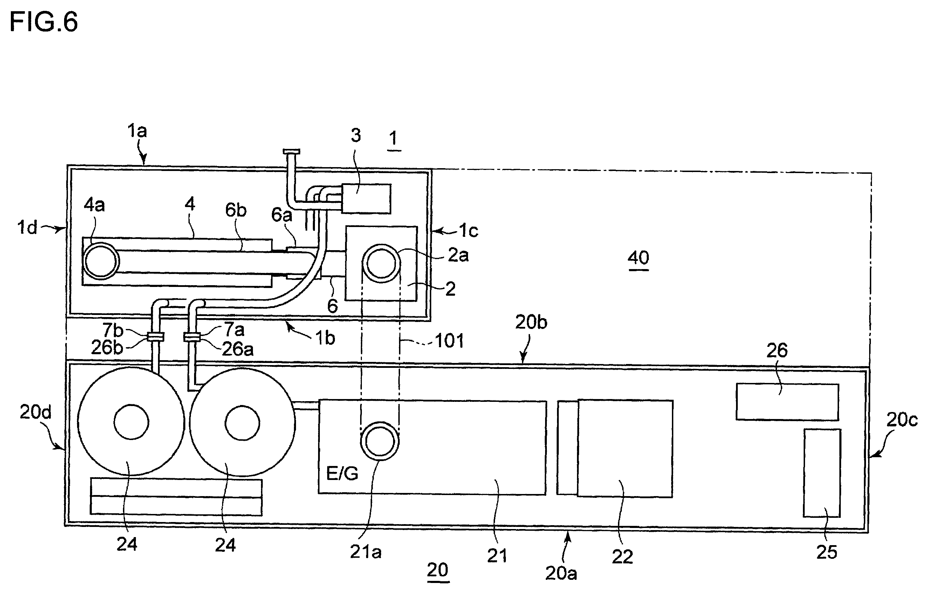

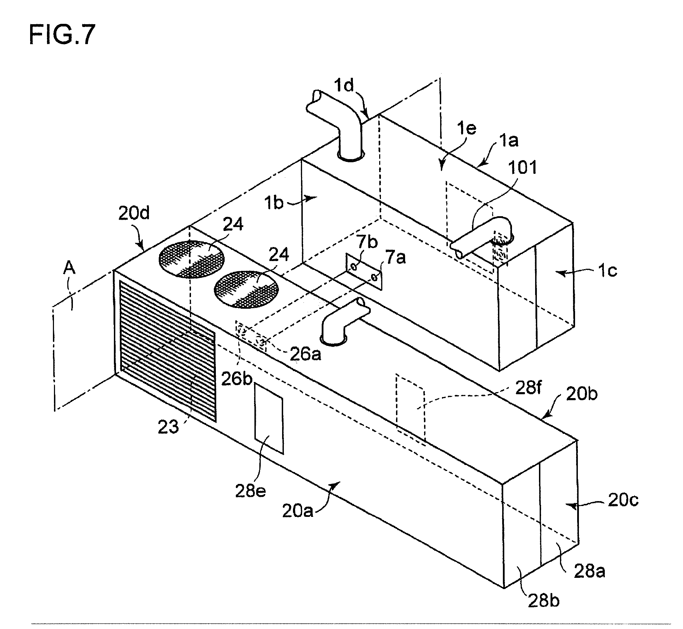

Specifically, as illustrated in FIG. 6 and FIG. 7, there is provided a container unit having combined together
a longer generator container in which a water-cooled engine is disposed at approximately a enter position in the longitudinal direction of the container, and, by sandwiching the engine, one or a plurality of radiators are disposed on one side (hereinafter, referred to as an 0-f side) in the longitudinal direction of the container, and a generator is disposed on the other side (hereinafter, referred to as a 40-f side) in the longitudinal direction of the container, with an exhaust gas outlet port of the engine provided at approximately a center part of the container above the engine, and
a shorter exhaust heat utilization container in which a muffler is disposed in a space on the other side (hereinafter, referred to as a 20-f side) in the longitudinal direction of the container, an exhaust gas inlet port is opened on a top wall of the container, and there is aligned a boiler generating steam by taking in exhaust gas of the engine via the muffler in the container space, on one side (hereinafter, referred to as a 0-f side) in the longitudinal direction of the container.

The longer generator container and the shorter exhaust heat utilization container are aligned in parallel in the longitudinal direction by making respective longer walls face each other so that the combined unit is formed. In the longer generator container, adjacently to a longer wall (hereinafter, referred to as an opposite wall) on the opposite side of a facing wall that faces the exhaust heat utilization container, the one or the plurality of radiators are extensively arranged along the opposite surface.

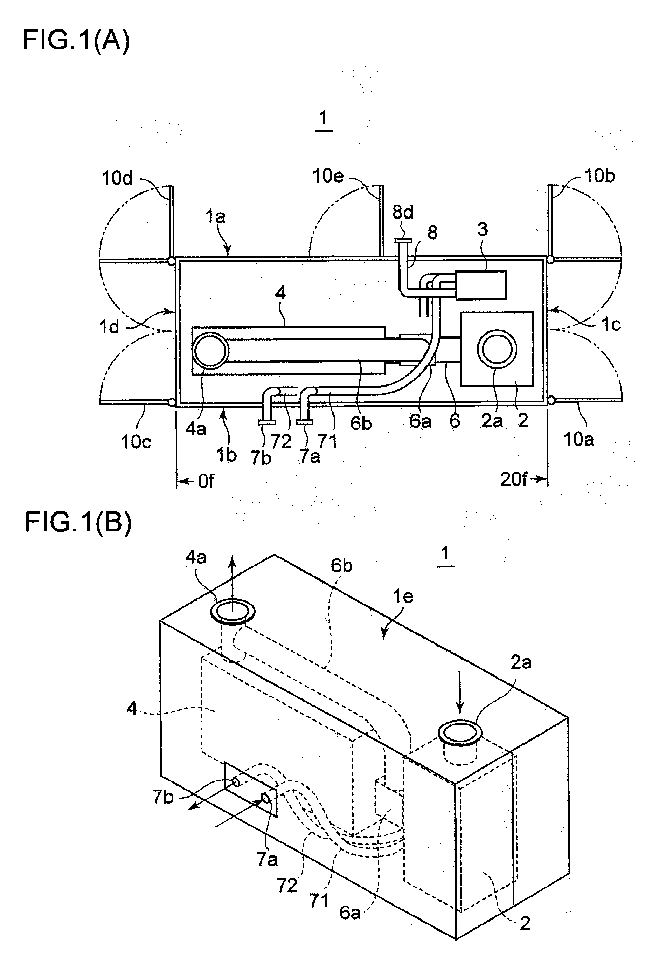

According to the present invention, as illustrated in FIG. 1(A), the container installation space has 40 f (12 m) in the longitudinal direction which is the same length as that of the longer container, and has 8 f times 2 (16 f (4.8 m) in the short direction, and the occupied rectangular space becomes relatively smaller than the arrangement layout in FIG. 8(A) to FIG. 8(C).

Further, in the present invention, an exhaust gas outlet port from which exhaust gas is discharged is provided on a top wall of the generator container, and an exhaust gas inlet port into which the exhaust gas is introduced from above is provided on a top wall of the exhaust heat utilization container. In this case, it is preferable that the muffler is arranged vertically on the other end side in the longitudinal direction of the container, and the exhaust gas inlet port of the muffler is opened on the top wall of the container.

According to the present invention, because the muffler is arranged vertically to a container height direction without being arranged horizontally to the container longitudinal direction, this is the most space saving arrangement. Further, the boiler disposed adjacently to the muffler in series in the container longitudinal direction can also take a large arrangement space. Even the exhaust gas of which a temperature has dropped considerably from immediately after being discharged from the engine after muffling by the muffler can obtain steam of a high temperature around 150°C.

A heat exchanger generating warm water for warm water supply by heat exchange with heated cooling water discharged from the engine is disposed parallel to the muffler. At the same time, on respective facing walls on which the generator container and the exhaust heat utilization container face each other, there are respectively provided a water guide port for guiding heated cooling water of the engine to the heat exchanger, and a return port of the cooling water of which heat has been deprived of by the heat exchanger.

According to the present invention, on the respective facing walls on which the longer generator container and the shorter exhaust heat utilization container face each other, the water guide ports (a cooling water outlet port on the generator container side and a cooling water inlet port on the exhaust heat utilization container) and cooling water return ports (a cooling water return port on the exhaust heat utilization container side and a cooling water return port on the generator container side) face each other. Therefore, there is no risk that the pipes are arranged to the outside.

Further, in the present invention, container shorter walls positioned on both end sides of the generator container and the exhaust heat utilization container are respectively formed by opened double doors.

According to the present invention, because both longer walls of both containers face each other, the shorter walls positioned on both sides in the longitudinal direction of the respective containers are opened. Therefore, based on the provision of double doors opened at these portions, taking in, taking out, and maintenance after the taking out of each unit housed in the respective containers along the longitudinal direction become easy.

Particularly, in the exhaust heat utilization container, because the heat exchanger and the mufflers are arranged in parallel in the shorter width direction, even when the exhaust heat utilization container is configured by the 20-f container, only the boiler and the mufflers are disposed in series in the longitudinal direction. Therefore, the container does not become longer.

### Advantageous Effects

Therefore, according to the present invention, while the longer generator container housing a generation functional portion is set as a mono-generator container, a shorter exhaust heat utilization container is effectively coupled as an option. Therefore, there can be obtained a container-unit type cogeneration utilization engine generator device having efficiently combined the two containers, without arranging pipes and cables, by saving space, and with maintainability after the assembling.

That is, preferably, the present invention provides a container-unit type cogeneration utilization engine generator device in which there are effectively arranged two kinds of containers in a small installation space and which has substantially shortened an assembling time (assembling days), the two kinds of containers including: a longer container housing an engine and parts at a generator body side including a generator driven by the engine; and a shorter container housing exhaust heat utilization devices including a boiler and a heat exchanger which respectively generate steam and warm water for warm water supply by utilizing exhaust heat of the engine.

### BRIEF DESCRIPTION OF DRAWINGS

FIGs. 1(A) and 1(B) are a part one of six-sided views of a shorter heat-supply exhaust heat utilization container housing heat utilization devices to be used in an embodiment of the present invention: FIG. 1(A) is a plan view illustrating an internal configuration; and FIG. 1(B) is a perspective view looked at from obliquely the right side in the front.
FIGs. 2(A) to 2(D) are a part two of the six-sided views of the exhaust heat utilization container; FIG. 2(A) is a front view; FIG. 2(B) is a rear view; FIG. 2(C) is a left side view; and FIG. 2(D) is a right side view.
FIG. 3 is a plan view illustrating an internal configuration of a longer generator container to be used in the present embodiment housing a generation functional portion including an engine, a radiator, and a generator.
FIG. 4 is a perspective view having the generator container in FIG. 3 looked at from the front side.
FIG. 5 is a front view illustrating an internal configuration of the generator container in FIG. 3.
FIG. 6 is a plan view of a container unit, illustrating an internal configuration of a container-unit type cogeneration utilization engine generator device according to the embodiment of the present invention that has the shorter exhaust heat utilization container and the longer generator container combined together in a preferable arrangement.
FIG. 7 is a perspective view illustrating the container in FIG. 6.
FIGs. 8(A) to 8(C) are plan views of a container unit, illustrating other layout configuration of a combination example of the shorter exhaust heat utilization container and the longer generator container.

### DETAILED DESCRIPTION

Hereinafter, a preferred embodiment of the present invention will be described in detail with reference to the drawings. Sizes, shapes, and other relative layouts of constituent parts described in the embodiment will not limit the range of the present invention, and are simple examples, unless specified otherwise.

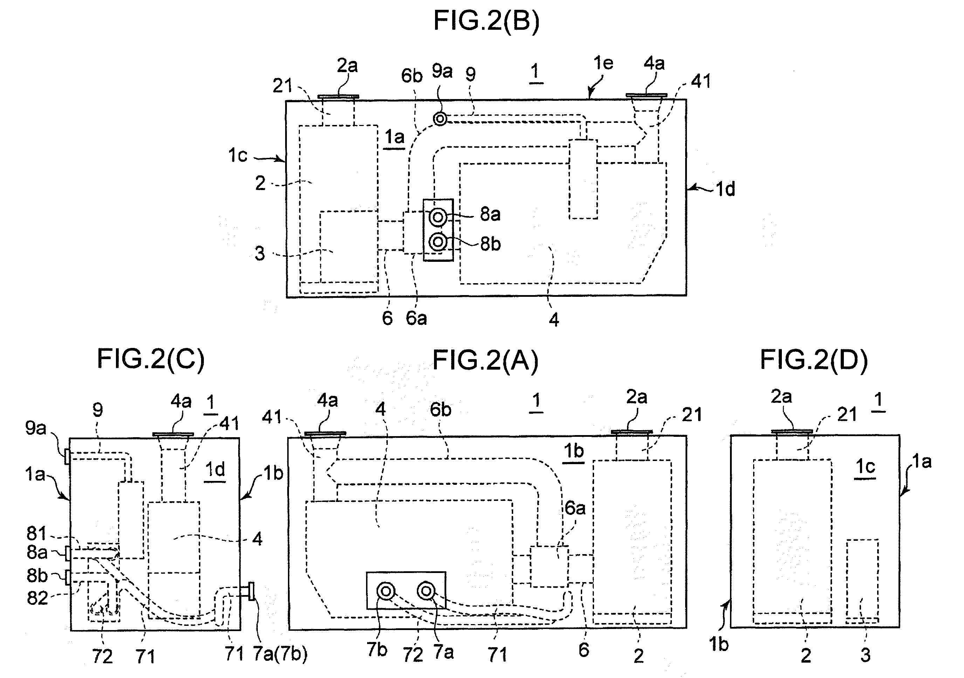

First, a shorter exhaust heat utilization container (a cogeneration container) according to an embodiment of the present invention will be described with reference to FIGs. 1 (A), 1(B) and FIGs. 2(A) to 2(D).

An exhaust heat utilization container 1 forms a rectangular shape, and according to the ISO standard, sizes of the container are standardized as follows: a container length is 20 f (6 m); a container width is 8 f (2.4 m); and a height is 8.6 f (2.6 m).

In the exhaust heat utilization container 1 of these sizes, in regulating walls of four sides based on FIG. 1(A), a longer wall positioned on a vertical side in the drawings will be referred to as a front longer wall 1a, a longer wall on an opposite side facing the front longer wall 1a will be referred to as a rear longer wall 1b, a shorter wall positioned on the container longitudinal direction 1 side on the left side of the front longer wall 1 a will be referred to as a 20-f side shorter wall 1c, a shorter wall facing the 20-f side shorter wall will be referred to as a 0-f side shorter wall 1d, and a top wall be denoted by 1e.

On each of the shorter walls 1c and 1d, there are respectively provided double doors 10a/10b and 10c/10d that are opened to both lateral sides from the center position, and are configured so that units housed inside can be taken out and fitted again along the container longitudinal direction. Further, the double doors are configured such that the double doors 10a and 10c on the front longer wall 1a side are opened by 90°, and the double doors 10b and 10c on the rear longer wall 1b side are opened by 180°. A single-side opening door 10e is provided at a center part of the rear longer wall 1b so that it becomes easy to perform maintenance of portions by opening the double doors 10a/10b and 10c/10d provided on both shorter walls 1c and 1d, for example, maintenance of the warm water pipe and the supply pipe of heated cooling water connected to the longer surface of a boiler 4 and a heat exchanger.

The reason that the double doors 10a and 10c on the front longer wall 1a side are opened by 90° is that a longer generator container 20 is adjacent to the front longer wall 1a.

In the 20-f side container space surrounded by the front longer wall 1a and the rear longer wall 1b on the 20-f shorter wall side, adjacently to the front longer wall 1a side, there is vertically disposed a muffler 2 that performs muffling of discharge noise by taking in exhaust gas of an engine 21. An exhaust gas inlet port 2a of the muffler 2 is coupled to the top wall of the container. A heat exchanger 3 that generates warm water by heat exchange with cooling water heated by the engine 21 is provided in parallel with the muffler 2 along the shorter wall 1c, on the rear longer wall 1b side in the shorter width direction of the container.

On the other hand, the boiler 4 that takes in the exhaust gas muffled by the muffler 2 and generates steam is extensively disposed on the shorter wall 1d side along the front longer wall 1a. The exhaust gas heat-exchanged by the boiler 4 is guided to the exhaust gas outlet port erected along the 0-f shorter wall, and the outlet port is coupled to the container top wall. With this arrangement, the exhaust gas muffled by the muffler 2 can be further muffled by the boiler 4. Therefore, even when the container according to the present invention is installed outdoors, noise to the surrounding can be minimized.

A connecting pipe 6 that takes in the exhaust gas to the boiler 4 is coupled between the muffler 2 and the boiler 4. A damper 6a is present in the connecting pipe 6. A bypass pipe 6b that makes the exhaust gas allocated by the damper 6a detour along the top wall of the boiler 4 is provided. The bypass pipe 6b is coupled to an exhaust gas outlet port 4a.

A reference number 9 denotes a signal detection pipe that transmits steam pressure and temperature signals in the boiler 4 to the longer generator container side via a detection port 9a, and transmits a signal for controlling the damper aperture.

On the other hand, on the rear longer wall 1b, there are disposed close to each other on the 20-f shorter wall 1c side, an inlet port 7a of an inlet pipe 7 for guiding cooling water heated by the engine 21, and a return port 7b of a return pipe for returning the heated cooling water and heat-exchanged cooling water, respectively of the heat exchanger 3.

To the heat exchanger 3, there are coupled an inlet pipe 71 for guiding fresh water to the heat exchanger 3, and a supply pipe 72 for supplying warm water generated by the heat exchanger 3 to the load side. These pipes 71 and 72 are guided to the front side longer wall 1 a through a lower side of the connecting pipe 6 in the space between the muffler 2 and the boiler 4, and are provided with a warm water supply port 8a and a fresh water inlet port 8b on the longer wall 1a.

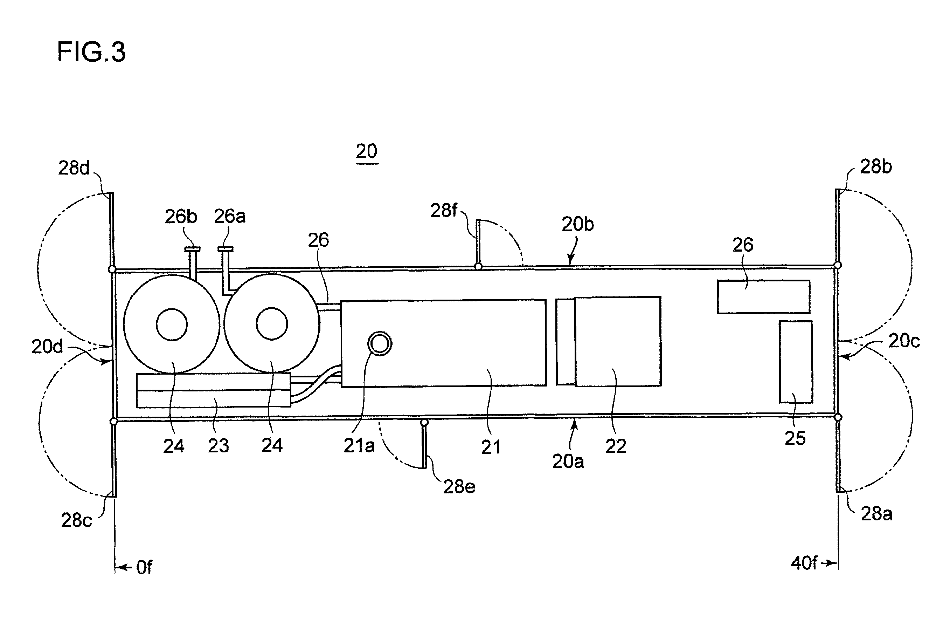

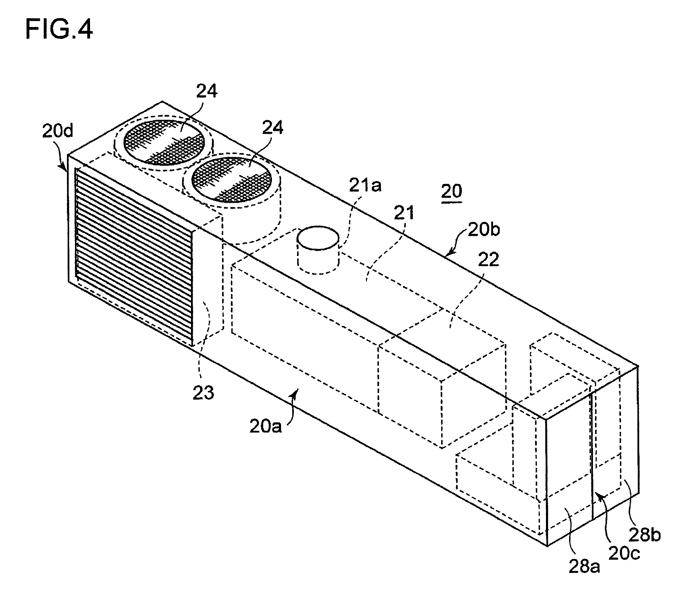

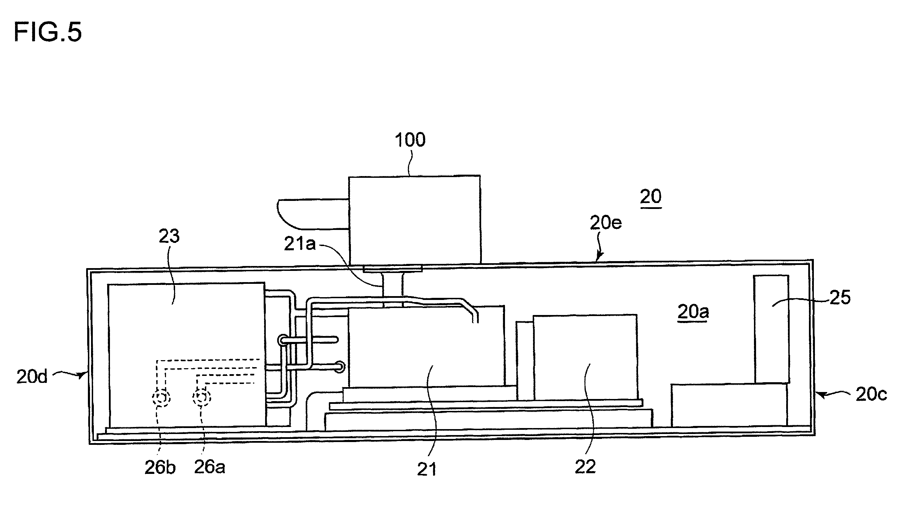

Next, there will be described the longer generator container (a mono-generator container) disclosed in FIG. 3 to FIG. 5.

The generator container 20 forms a rectangular shape, and sizes of the container are standardized as follows: a container length is 40 f (12 m); a container width is 8 f (2.4 m); and a height is 8.6 f (2.6 m).

In the generator container 20 of these sizes, in regulating walls of four sides based on FIG. 3, a longer wall positioned on the right side in the drawing will be referred to as a front longer wall 20, a longer wall on the left side (an opposite side) in the drawing facing the front longer wall will be referred to as a rear longer wall 20b, a shorter wall shorter wall positioned on the container longitudinal direction 1 side on the lower side of the front longer wall 20a will be referred to as a 40-f side shorter wall 20c, a shorter wall facing the 40-f side shorter wall will be referred to as a 0-f side shorter wall 20d, and a top wall be denoted by 20e.

On each of the shorter walls 20c and 20d, there are respectively provided double doors 28a/28b and 28c/28d that are opened to both lateral sides from the center position, and are configured so that units (an engine 22, a generator 22, a radiator, a controller, and the like) housed inside can be taken out and fitted again along the container longitudinal direction. The double doors 28a/28b and 28c/28d are configured such that the doors on both the front longer wall side and the rear longer wall side can be opened by 180°.

The reason that both the double doors 28a/28b and 28c/28d of the generator container are opened by 180° unlike the doors of the shorter exhaust heat utilization container 1 is that the adjacent container (the shorter exhaust heat utilization container 1) does not become a hindrance at the opening time. Single-side doors 28e and 28f are provided on both longer wall sides at the center part of the longer wall where the engine 21 is housed so that maintenance of the engine 21 is facilitated.

An exhaust gas outlet port 21a of the engine 21 is provided near the center of the container top wall facing the engine 21, preferably in deviation to the 0-f side from the 20-f position. A reference number 100 denotes a silencer which is provided on a container top wall 20e via an L-shaped pipe, and which is fitted in the case of a mono-generation configuration without using the shorter exhaust heat utilization container.

The engine 21 is disposed by positioning the barycenter at approximately a center position in the longitudinal direction of the internal space in the generator container 20, preferably in the range of 20 f ± 10 f on both sides in the longitudinal direction of the 20-f position as the center position of the 40 f. As described above, the engine 21 of a large weight load is disposed at the center position in the longitudinal direction of the longer generator container 20, and a plurality of rows of radiators 23 are disposed in series to the engine 21, on the housing side of the 0-f side by sandwiching the engine 21, close to the front longer wall 20a side, along the front longer wall 20a.

Two cooling fans 24 are arranged in the housing space between the plurality of rows of the radiators 23 and the rear side longer wall, and are configured such that cooling water is induced and air is guided to the radiators 23.

Further, on the rear longer wall 20b surface on the side facing the radiators 23, there are provided an outlet port 26a for guiding the heated cooling water of the engine 21 to the heat exchanger 3, and a heated cooling water return port 26b, and the cooling water pipe 26 is communicated between the radiators 23 and the engine 21.

Because high cooling is necessary in particularly the closed container, the radiators can be disposed widely and high cooling can be secured, by disposing the radiators 23 closely along the front longer wall 20a, and by integrally disposing on the rear longer wall 20b the outlet port 26a and the heated cooling water return port 26b.

Further, on the shorter walls 20c and 20d on both end sides in the longitudinal direction, the double doors 28a/28b and 28c/28d are configured such that the shorter walls can be fully opened, and the engine 21 and the generator 22 can be take out. On the depth sides of the double doors 28a/28b on the generator 22 side (the 40-f side), a control panel 25 is disposed.

That is, the generator 22 is disposed adjacently to the other side (the 40-f side) in the longitudinal direction of the engine 21, and the both are configured to be axially coupled to be able to transmit the driving force of the engine 21 to the generator 22.
Further, in the space between the generator 22 and the 40-f shorter wall, the control panel 25 is arranged to face the double doors 28a/28b, and a lubricant tank 26 is arranged on the side part of the control panel 25.

Next, there will be described a method of arranging the cogeneration container by effectively combining the longer generator container 20 and the shorter exhaust heat utilization container 1.

First, it will be investigated based on FIG. 6 to FIGs. 8(A) to 8(C) whether the space is saved most and whether there is no arrangement of the pipe and the cable when the shorter exhaust heat utilization container 1 and the longer generator container 20 are laid out.

First, as illustrated in FIG. 8(A), there is a method of connecting the 40-f end surface of the longer generator container 20 and the 0-f end surface of the shorter exhaust heat utilization container 1 to form a long side.

When this layout configuration is employed, the length in the container length direction becomes 60 f, but the width in the width direction becomes 8 f (2.4 m). In the case of a ground (a power supply arrangement position) of which one side is equal to or larger than 20 m, because the width is the small 8 f, a plurality of cogeneration power supply devices can be arranged densely, and this is preferable.

However, as described above, when the containers 1 and 20 are connected in the longitudinal direction, the exhaust gas outlet port 21 a fitted to approximately the center part of the top wall of the longer generator container 20 and the exhaust gas inlet port 2a of the muffler 2 provided on the container top wall on the shorter exhaust heat utilization container 1 side are connected by a communication pipe 101. In order to shorten the length of the communication pipe 101, the 20-f side end surface of the shorter exhaust heat utilization container 1 and the 40-f end surface of the longer generator container 20 need to be configured to face each other. This necessarily results in a long distance between the radiators 23 on the 0-f end surface side arranged in the longer generator container 20 and the heat exchanger 3 arranged on the shorter exhaust heat utilization container 1 side (because the engine 21, the generator 22, and the muffler 2 are present between the radiators 23 and the heat exchanger 3). Further, arranging the pipe inside the container along the container longitudinal direction is actually impracticable, and the pipe 31 is to be actually arranged along the longer wall outside the container. Therefore, the arranged length of the pipe 31 and the disposition width also become large. In addition, an oil-supply pipe containing warm water is to be arranged long adjacently to the outer side surface of the container, and this is dangerous when the pipe is taken out by error. Accordingly, the layout in FIG. 8(A) cannot be employed.

Next, there is a T-shaped layout configuration as a configuration in FIG. 8(B).

In the drawing, on the center longer wall surface adjacent to the exhaust gas outlet port 21 a fitted to approximately the center part of the top wall of the longer generator container 20, there is connected in a T shape the muffler 2 side shorter end surface of the shorter exhaust heat utilization container 1 on the muffler 2 disposition side.

According to this configuration, a straight line distance between the exhaust gas outlet port 21a fitted to approximately the center part of the top wall of the longer generator container 20 and the exhaust gas inlet port 2a of the muffler 2 provided on the container top wall on the shorter exhaust heat utilization container 1 side is substantially shortened as compared with the distance in FIG. 8(A), and the length of the communication pipe 30 can be substantially shortened. On the other hand, the pipe between the radiators 23 on the 0-f end surface side arranged in the longer generator container 20 and the heat exchanger 3 arranged on the shorter exhaust heat utilization container 1 side needs to be arranged in the external space at the outside of the container in a similar manner to that in FIG. 8(B).

Further, additionally, the installation space of the container unit becomes (40 f (12 m) x (20 f + 8 f (8.6 m))), and an unnecessary installation space 40 becomes large.

In order to reduce the installation space of the container unit, there may be considered an L-shaped layout as illustrated in FIG. 8(C). This layout in an L-shaped configuration is provided by bringing into contact with each other the shorter end surface of the longer generator container 20 and the longer surface on the muffler 2 side of the shorter exhaust heat utilization container 1. Based on this, a connection distance between the exhaust gas outlet port fitted to approximately the center part of the 40-f top wall and the exhaust gas inlet port 2a of the muffler 2 of the shorter exhaust heat utilization container 1 on the muffler 2 disposition side becomes about (40 f/2 (6 m) + 8/2 f (4.3 m)) which becomes a moderate short distance. Further, because of the L-shape, the connection distance becomes ((40 f (12 m) + 8 f (8.6 m)) x (20 f - 8 f (8.6 m)), and there is no change in that the unnecessary installation space 40 becomes large.

Next, a preferred layout configuration of the present invention will be described based on FIG. 6 and FIG. 7.

According to the present embodiment, the generator container 20 and the exhaust heat utilization container 1 are aligned in parallel in the longitudinal direction by making respective longer walls face each other so that the combined unit is formed. At the same time, the radiators 23 are extensively arranged along the front side longer wall, adjacently to the front side longer wall on the opposite side of the rear side longer wall facing the exhaust heat utilization container 1.

Therefore, as illustrated in FIG. 6 and FIG. 7, the container installation space has 40 f (12 m) in the longitudinal direction which is the same length as that of the longer generator container, and has 8 f times 2 (16 f (4.8 m) in the short direction, and the installation space 40 as the occupied rectangular space becomes relatively smaller than the arrangement layout in FIG. 8(A) to FIG. 8(C).

In the present embodiment, the heat exchanger 3 generating warm water for warm water supply by heat exchange with heated cooling water discharged from the engine 21 is disposed parallel to the muffler 2 or in the space between the muffler 2 and the boiler 4. At the same time, on respective facing walls on which the generator container 20 and the exhaust heat utilization container 1 face each other, there are respectively provided the water guide port for guiding heated cooling water of the engine 21 to the heat exchanger 3, and the return port of the cooling water of which heat has been deprived of by the heat exchanger 3. (The cooling water outlet port 26a on the longer generator container 20 side and the cooling water inlet port 7a on the shorter heat exhaust utilization container side) are connected together via the communication pipe. Further, the cooling water return ports (the cooling water return port 7b on the shorter heat exhaust utilization container 1 side and the cooling water return port 26b on the longer generator container side) face each other. Therefore, there is no risk that the pipes are arranged to the outside. In addition, the communication pipes 32 may be configured by quick coupling.

Further, according to the present embodiment, the container shorter walls positioned on both end sides in the longitudinal direction of the longer generator container and the shorter exhaust heat utilization container are respectively formed by the opened double doors 10a to 10d, and further, the longer walls of both the containers 1 and 20 face each other. Therefore, the shorter walls positioned on both sides in the longitudinal direction of the respective containers 1 and 20 are opened. Consequently, based on the provision of the double doors 10a to 10d opened at these portions, taking in, taking out, and maintenance after the taking out of each unit housed in the respective containers along the longitudinal direction become easy.

Particularly, in the shorter exhaust heat utilization container 1, because the heat exchanger 3 and the mufflers 2 are arranged in parallel in the shorter width direction, only the boiler 4 and the mufflers 2 are disposed in series in the longitudinal direction. Therefore, the container does not become longer.

In the space of the shorter exhaust heat utilization container 1, adjacently to the front longer wall 1a side, there is vertically disposed the muffler 2 that performs muffling of discharge noise by taking in exhaust gas of the engine 21. The exhaust gas inlet port 2a of the muffler 2 is coupled to the container top wall. Accordingly, there is installed on the container top part the communication pipe 101 that couples between the exhaust gas outlet port 21a fitted to approximately the center part of the top wall of the 40-f container 20 described later and the exhaust gas inlet port 2a of the muffler 2 provided on the container top wall on the 20-f container 1 side, so that it becomes possible to secure easiness of fitting, maintainability, and safety of workers. Further, the heat exchanger 3 that generates warm water by heat exchange with cooling water heated by the engine 21 is provided in parallel with the muffler 2 along the shorter wall 1c, on the rear longer wall 1b side in the shorter width direction of the container.

On the other hand, the boiler 4 that takes in the exhaust gas muffled by the muffler 2 and generates steam is extensively disposed on the shorter wall 1d side along the front longer wall 1a. The exhaust gas heat-exchanged by the boiler 4 is guided to the exhaust gas outlet port erected along the 0-f shorter wall, and the outlet port is coupled to the container top wall.

With this arrangement, the exhaust gas muffled by the muffler 2 can be further muffled by the boiler 4. Therefore, even when the container according to the present invention is installed outdoors, noise to the surrounding can be minimized.

For the engine, a liquid-cooled engine such as a water-cooled engine and oil-cooled engine is used.

### Industrial Applicability

Therefore, according to the present invention, it is possible to obtain a container-unit type cogeneration utilization engine generator device that effectively utilizes two containers, by effectively connecting the two containers, particularly, by setting a container housing the generation function portion in the basic container configuration (a mono-generation container), by effectively connecting a smaller cogeneration container as an option, without arranging pipes and cable, and by saving space, and with good maintainability after the assembling. The cogeneration utilization engine generator device includes: a longer container, particularly a 40-f container, housing an original generation functional portion which functions as an engine generator including an engine and a generator driven by the engine, the longer container being mounted with an intermediate type power supply device of a required output, without unnecessarily lowering the rating of the engine; and a shorter exhaust heat utilization container, preferably a 20-f container as a half of the 40-f container, housing a boiler and a heat exchanger utilizing the exhaust heat of the engine.

### Reference Signs List

- 1: 20-f container
- 2: Muffler
- 2a: Exhaust gas inlet port of muffler
- 3: Heat exchanger
- 4: Boiler
- 7a, 7b: Inlet port of fresh water to be guided to heat exchanger and warm water take-out port after heat exchange
- 8a, 8b: Inlet pipe and return pipe of heated cooling water to be guided to heat exchanger by engine
- 20: 40-f container
- 21: Engine
- 21a: Exhaust gas outlet port of engine
- 22: Generator
- 23: Radiator

## Claims

1. A container unit comprising:
a generator container disposed in a container, an engine and one or a plurality of radiators on one side in a container longitudinal direction of the engine; and
an exhaust heat utilization container recovering exhaust heat of the engine and generates steam or warm water, wherein
the generator container and the exhaust heat utilization container form a combination unit by making respective longer walls face each other, and in the generator container, adjacently to a longer wall (hereinafter, referred to as an opposite wall) on an opposite side of a facing wall that faces the exhaust heat utilization container, the one or plurality of radiators are arranged to extend along the opposite surface.

2. The container unit according to claim 1, wherein an exhaust gas outlet port from which exhaust gas is discharged is provided on a top wall of the generator container, and an exhaust gas inlet port into which the exhaust gas is introduced from above is provided on a top wall of the exhaust heat utilization container.

3. The container unit according to claim 1, wherein the generator container is configured by a 40-f container and the exhaust heat utilization container is configured by a 20-f container, and shorter walls on respective 0-f sides of both containers are formed as a common single straight line reference plane.

4. The container unit according to claim 1, wherein there is disposed a heat exchanger generating warm water by heat exchange between heat discharged from the engine and cooling water, and on respective facing walls on which the generator container and the exhaust heat utilization container face each other, there are respectively provided a water guide port for guiding heated cooling water to the heat exchanger and a return guide port from which cooling water of which heat has been deprived of by the heat exchanger is returned.

5. The container unit according to claim 1 or 4, wherein the water guide port and the return guide port are integrally arranged at one position in a longitudinal direction.

6. The container unit according to claim 1 or 2, wherein container shorter walls positioned at both end sides in a longitudinal direction of the generator container and the exhaust heat utilization container are respectively formed by released double doors.
